# EUROPEAN PATENT SPECIFICATION

(11) **EP 1 747 856 B1**
(45) Date of publication and mention of the grant of the patent: **03.02.2010**
(21) Application number: 06115116.3
(22) Date of filing: 08.06.2006
(51) Int. Cl.: B25J 9/00, B23P 21/00

(54) **A cell for automated assembly of components and/or execution of operations on a piece on an industrial production line, and a manipulator robot used in said cell**
Automatisierte Zelle zur Montage von Komponenten und/oder zum Ausführen einer Bearbeitung auf einem Werkstück in einer Fertigungsstrasse und Roboter für eine solche Zelle
Cellule d'assemblage automatisé de composants et/ou d'exécution d'opérations sur une pièce dans une ligne de production industrielle et robot utilisé dans une telle cellule

(30) Priority: 25.07.2005 IT TO20050513
(43) Date of publication of application: 31.01.2007
(73) Proprietor: COMAU S.p.A., 10095 Grugliasco (Torino) (IT)
(72) Inventor: Crepaldi, Gianluca, 10098 Rivoli (Torino) (IT); Braga, Piero, 10137 Torino (IT); Rodari, Felice, 10132 Torino (IT)
(74) Representative: Notaro, Giancarlo

(56) References cited:
- JP-A- 6 320 364
- JP-A- 11 285 894
- US-A- 5 438 647

## Description

### TEXT OF THE DESCRIPTION

The present invention relates to the field of cells for automated assembly of components on pieces on an industrial production line.

Assembly cells of the type indicated are, for example, used in mass production of engines for motor vehicles in order to assemble various components of the engine on the engine block or on the cylinder head of the engine.

Assembly cells of this type have already been developed and used, provided in which is a conveying line for feeding the pieces at input to or at output from the cell and which are equipped with means for transferring the pieces from the conveying line to the working position within the cell or, vice versa, from said working position to the conveying line.

The purpose of the present invention is to provide an assembly cell of the type indicated above that will be characterized by a high flexibility of operation in order to enable its advantageous use even in the case of small-scale production, and even in the case of a high variability of the conformation of the pieces on which it is necessary to operate.

A further purpose of the invention is to provide a manipulator robot having a relatively simple structure that may be used in a particularly efficient way for the purposes referred to above.

JP 11285894 discloses a manipulator robot comprising a first manipulator with a worktable, and a second manipulator which have a fixed supporting structure in common and two mutually independent systems of arms.

With a view to achieving the above and further purposes, the subject of the invention is a manipulator robot according to claim 1 and a cell for automated assembly according to claim 6.

In use, the robot according to the invention enables, on the one hand, pieces that are to be brought into the assembly cell, or coming from the assembly cell to be picked up from the conveying line or to be unloaded onto the conveying line, whilst the second manipulator is able to pick up the piece from the worktable of the first manipulator, bringing it into the aforesaid workstation, or, vice versa, to bring the piece back from the workstation to the worktable. During stay of the second manipulator in the condition for supporting the piece in a position corresponding to the workstation, the first manipulator is able to maintain the worktable in a position adjacent to the workstation. In said step, whereas the equipment or robots envisaged in the assembly cell for performing the operations of assembly operate on the piece that is waiting in the working position, the aforesaid worktable can also function as support-magazine for a series of components that are to be picked up by the aforesaid operating robots and to be mounted on the piece. Once the assembly operations are completed, the first and second manipulators can be activated to bring the piece rapidly back above the worktable of the first manipulator, whilst practically simultaneously the latter finally brings the worktable back into a position corresponding to the conveying line for unloading the piece at output from the assembly cell onto the conveying line.

The subject of the present invention is also the aforesaid robot taken in itself, provided with the first manipulator and the second manipulator described above.

A further important characteristic of the robot according to the invention lies in the fact that the second manipulator is provided with a flange for attachment and support in cantilever fashion of the piece. Said flange is supported by the manipulator in such a way as to be orientable as desired in space. In addition, according to a further preferred characteristic, said attachment flange has an annular conformation, and the second manipulator is shaped in such a way as to be able to present the end face of the piece that is adjacent to the attachment flange facing upwards. In other words, the manipulator robot according to the invention is able to orient the piece in such a way that any face of the piece may be "offered" to the operating robots, without the need to detach the piece from the corresponding attachment and supporting flange.

In addition, a further important characteristic of the invention lies in the fact that the first and second manipulators forming part of the robot according to the invention are provided with the respective articulated arms that move within theoretical spaces contained within one another, in such a way that the overall dimensions of the robot are very small.

Further characteristics and advantages of the invention will emerge from the ensuing description with reference to the annexed plate of drawings, which is provided purely by way of non-limiting example and in which:
- Figure 1 is a perspective view of a manipulator robot according to the present invention;
- Figure 2 is a perspective view of a first manipulator forming part of the robot of Figure 1;
- Figure 3 is a perspective view of a second manipulator forming part of the robot of Figure 1;
- Figures 4, 5 show two further operating positions of the robot of Figure 1;
- Figure 6 is a schematic view of an assembly cell including the robot according to the invention; and
- Figure 7 is a view at an enlarged scale of a detail of the feed line of the cell.

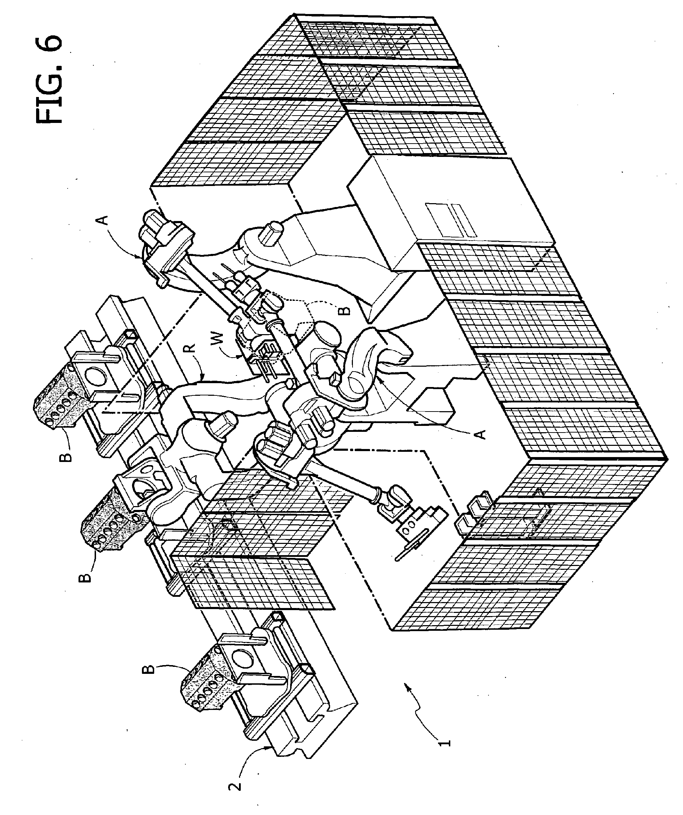

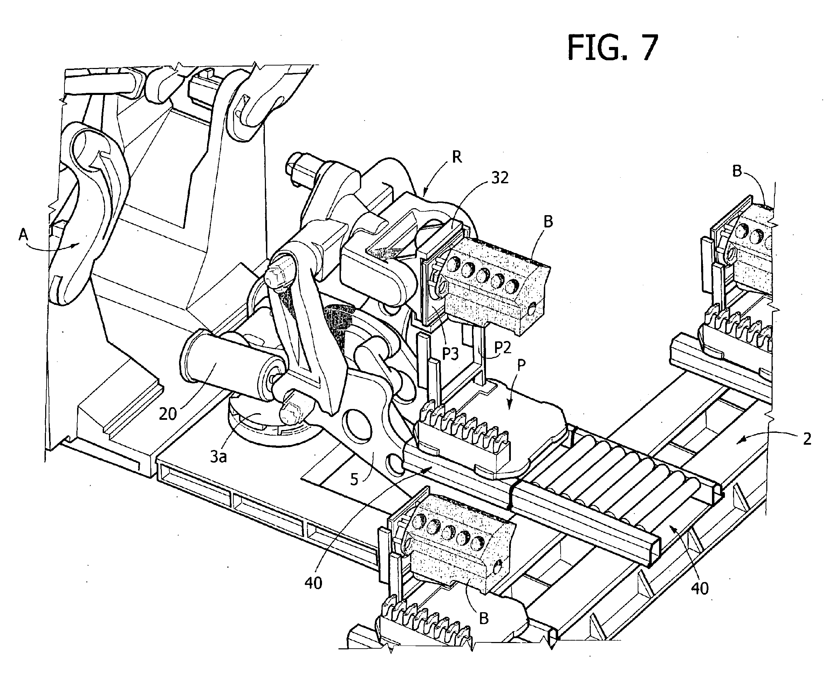

With reference to the annexed plate of drawings and in particular to Figures 6, 7, number 1 designates as a whole an assembly cell, designed for automated assembly of various components on the engine block B of a motor vehicle. A conveying line 2 feeds in succession the engine blocks B in an industrial production line to the assembly cell 1 and is moreover used for causing the pieces at output from the assembly cell 1 to proceed to the next stations of the production line. The details corresponding to the concrete embodiment of the conveying line 2 are here omitted in so far as said line can be made in any known way; for example, it can be a pallet conveying line of the accumulation type, in which the pieces are conveyed, for example, on a chain conveyor by means of respective pallets, each of which supports thereon a piece and can be stopped along the line to wait for being picked up and carried into the assembly cell 1. In said type of conveyors, the conveying chains slide underneath the pallets that accumulate along the line when these are stopped. Figure 6 also schematically illustrates a pallet P carrying a respective engine block B thereon, the specific structure and conformation of said pallet being described in detail in what follows. The assembly cell 1 is provided with a manipulator robot R that is able to pick up a pallet P with the piece B thereon from the conveying line 2 and then convey the piece B into a position corresponding to a workstation W in the assembly cell 1, where one or more operating robots A of any known type carry out the operations of assembly of one or more components on the piece. Conversely, the same manipulator R is able, as will be described in detail in what follows, to bring a piece B, at the end of the operations of assembly carried out in the workstation W, back again on the respective pallet P, and then deposit the pallet P with the piece B on it on the conveying line 2, for it to be fed to the stations downstream of the production line.

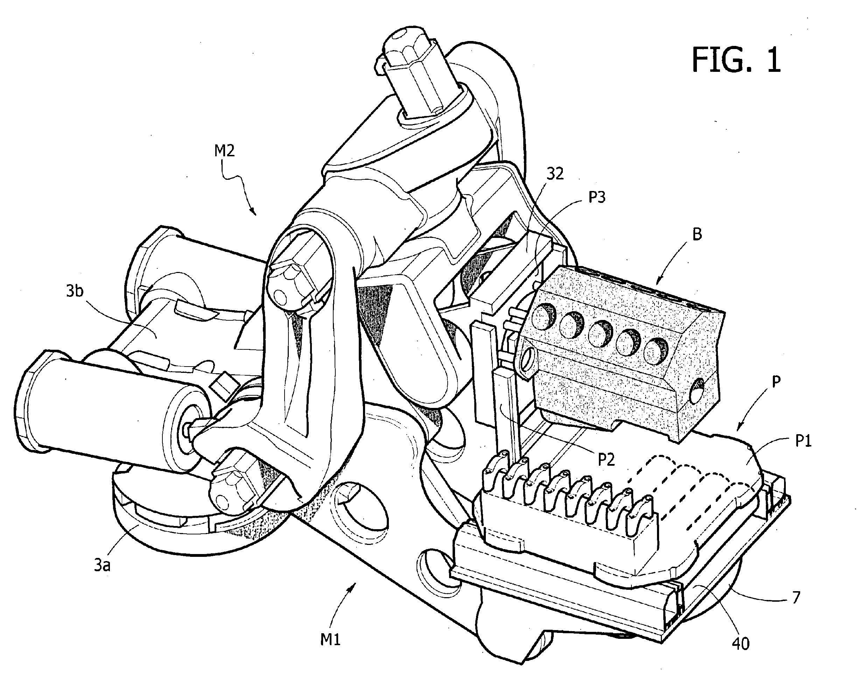

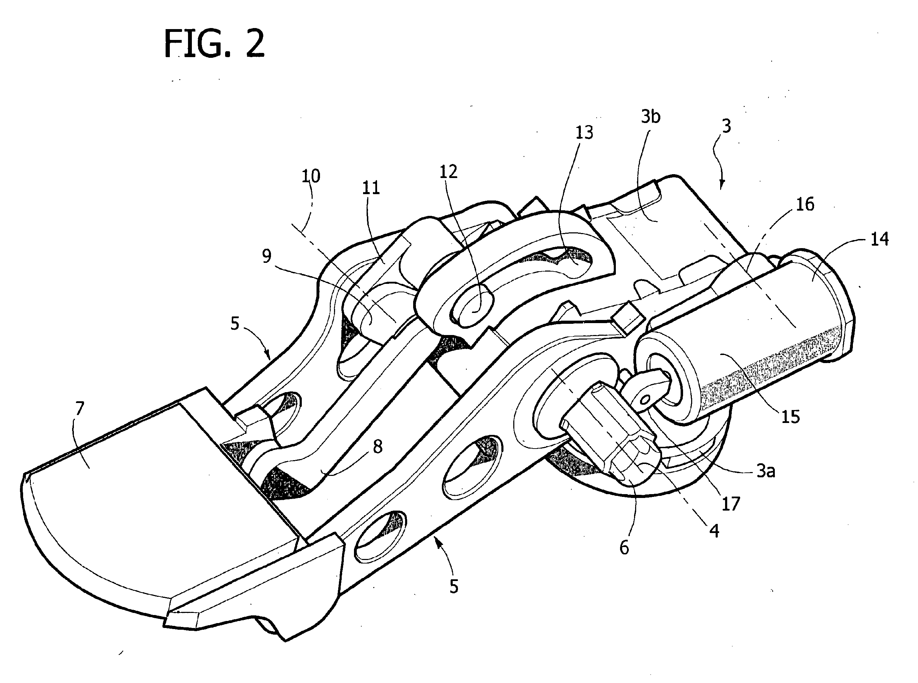

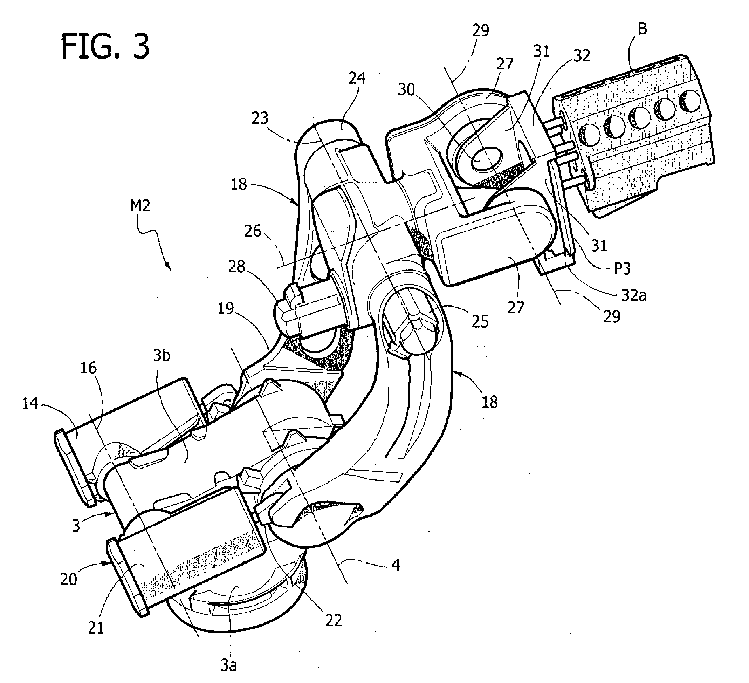

The robot R illustrated in Figure 6 is shown at an enlarged scale in different operating conditions in Figures 1 and 4, 5. The robot R is made up of a first manipulator and a second manipulator integrated with one another, which are illustrated, separately, in Figures 2 and 3, respectively, of the annexed plate of drawings.

With reference to Figure 2, a first manipulator forming part of the robot R is designated as a whole by the reference M1. The manipulator M1 has a fixed supporting structure 3 in common with the second manipulator, designated by M2 in Figure 3.

The fixed supporting structure 3 common to the two manipulators M1, M2 has a base 3a, rigidly mounted on which is a horizontally elongated hollow body 3b. One end of the body 3b supports, in an oscillating way about a horizontal axis 4, a pair of arms 5, which are connected in rotation to one another about the axis 4 and are controlled by an electric motor 6. The free ends of the arms 5 are articulated to a worktable 7, which is kept horizontal, during the movements of oscillation of the arms 5, via a parallel-linkage system, including an articulated arm 8, which at one end is articulated to the structure of the table 7 about an axis parallel to, and set at a distance from, the axis of articulation between the table 7 and the arms 5 and at the other end is articulated to one end of a crank member 9. The crank member 9 is hinged on the structure of one of the two arms 5 about an axis 10 and is fixed to a second crank member 11 carrying a pin 12 guided in an arched slit 13 made in the fixed body 3b. As already mentioned above, the arrangement is such that, when the motor 6 governs a simultaneous oscillation of the two arms 5, the worktable 7 is displaced about the axis 4, while remaining horizontal. Of course, any other parallel-linkage arrangement that will ensure horizontality of the table 7 during its movements may be adopted. In order to alleviate the effort of the motor 6 when it is raising the worktable 7 with the piece (not illustrated in Figure 2) resting thereon, a balancing cylinder 14 is provided, of the type traditionally used in manipulator robots with articulated arms, which comprises a cylindrical casing 15 mounted oscillating about an axis 16 orthogonal to its own axis on the structure 3b and having inside it a piston (not illustrated), loaded by a spring (not illustrated) and fixed to a stem 17, the free end of which is articulated to one of the arms 5 about an axis parallel to, and set at a distance from, the axis 4. The arrangement is such that the spring contained within the cylinder 15 tends to cause rotation upwards of the arms 5, hence reducing the effort of the motor 6.

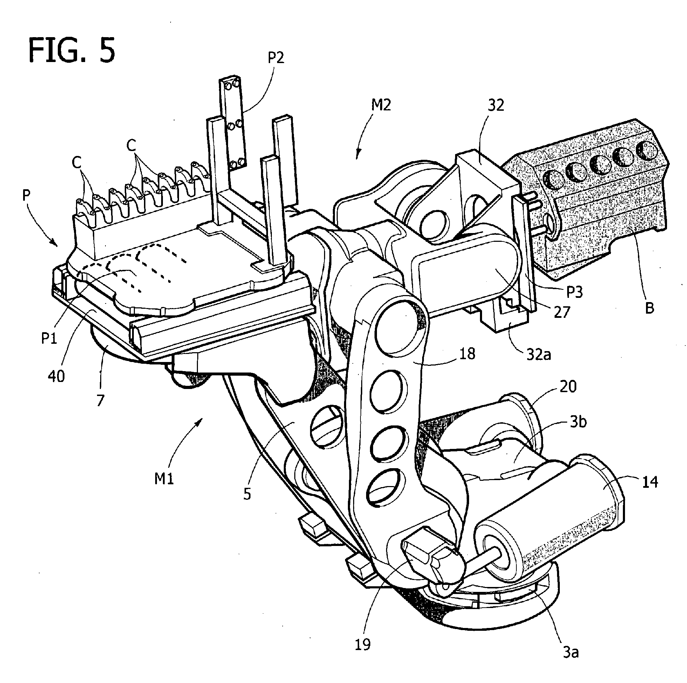

Thanks to the arrangement described above, the motor 6 can be controlled to displace the table 7 between a lowered position visible in Figure 1, where the worktable 7 is located in a position suitable for receiving a pallet P with the piece B thereon from the conveying line 2 or for enabling transfer of the pallet P with a piece B along the conveying line 2, as far as a raised position (see, for example, Figure 5) substantially adjacent to the workstation W in the assembly cell, in which the worktable supports the pallet P, said pallet being used as support-magazine for a series of components C that are to be assembled on the piece in the workstation W.

As may be seen in Figure 1, the pallet P has a horizontal table P1 rising from which is a vertical frame P2 (Figure 5), on which there can be slidingly inserted a vertical frame P3 with an annular attachment flange to which the piece B is fixed in cantilever fashion. The table P1 is received on a roller surface carried by a structure 40 screwed on the table 7. As may be seen in Figure 7, the conveying line 2 carries a plurality of similar structures 40 with roller surfaces, carried on each of which is a pallet P bearing a piece B. When the line stops, the piece B that is in front of the workstation can translate with its pallet P into the position illustrated in Figure 7, on the table 7, rolling on the roller surface of the two structures 40 thus aligned. The means for causing said translation can be of any type and are not illustrated in detail herein.

With reference now to Figure 3, the second manipulator M2 has, as already mentioned above, the fixed supporting structure 3 in common with the first manipulator M1. The manipulator M2 comprises two oscillating arms 18, which are mounted oscillating on the fixed structure 2 about the same axis 4 of oscillation of the two arms 5 of the first manipulator M1, the arms 18 being arranged on the outside of the two arms 5 of the first manipulator (see Figures 1 and 4, 5).

Rotation of the two oscillating arms 18 of the second manipulator M2 is controlled by a motor 19 situated on the side opposite to the motor 4, in a way altogether independent with respect to rotation of the oscillating arms 5 of the first manipulator M1. In addition, the effort of the motor 19 is alleviated by a balancing cylinder 20 altogether similar to the balancing cylinder 14, having a cylindrical body 21 mounted in an oscillating way about the aforesaid axis 16 on the structure 3 and having inside it a spring for loading of a piston fixed to a stem 22, which is articulated to one of the two oscillating arms 18 about an axis parallel to, and set at a distance from, the axis 4. The free end of the two oscillating arms 18 support in rotation about a horizontal axis 23 a cross-member 24, rotation of which about the axis 23 is controlled by a motor 25 mounted, in such a way that it shares the same axis 23, on the end of one of the two arms 18. The cross-member 24 in turn supports in rotation, about an axis 26 orthogonal to the axis 24, a fork-like structure, the two branches of which are designated by 27. Rotation of the fork-like structure about the axis 26 is controlled by a motor 28 carried by a supporting structure fixed to the cross-member 24. The two branches 27 of the fork-like structure support in an oscillating way about an axis 29 two flanges 31 projecting from a gripping member 32, which is provided with a mobile jaw 32a (governed by an actuator of any known type, not illustrated). Said oscillation is controlled by an electric motor (not visible in the drawings) mounted on one of the two branches 27.

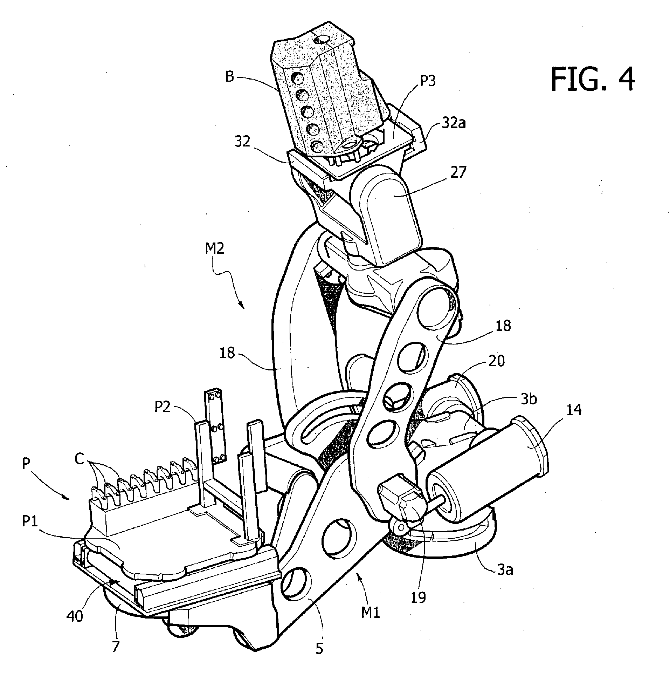

Thanks to the structure illustrated above, the second manipulator M2 is able to bring the gripping member 32 into a position corresponding to the frame P3 when the pallet P with the piece B thereon is located in the position illustrated in Figure 1. In said condition, the gripping member 32 grips the frame P3, after which the manipulator M2 raises and separates the frame P3 from the vertical frame P2 (Figure 5) and then brings the piece B, with a progressive movement of its own, through the position illustrated in Figure 4, as far as the position illustrated in Figure 5, in which the engine block B is located with its top surface facing upwards thanks to the fact that, during the aforesaid movement, there has simultaneously occurred a rotation through 180° of the fork-like structure 27 about the axis 26.

It should be noted that the frame P3 is annular, i.e., it has a central opening in such a way that, in the case where it is rotated with respect to the fork-like structure through approximately 90° with respect to the condition illustrated in Figure 3, the face of the piece facing the frame P3 is accessible from the outside for assembly operations. All the remaining faces of the piece are on the other hand readily accessible and also available in a position facing upwards, through corresponding rotations of the fork-like structure 27 or of the cross-member 24. The manipulator M2 consequently enables machining on all six faces of the piece B, without any need to detach the piece from the respective attachment flange.

Once the piece has been brought into the workstation W, the manipulator M1 in any case keeps the pallet P in the position illustrated in Figure 5, close to the workstation W, in such a way that the operating robots are able to pick up the components C from the pallet P, whilst the piece B is in the workstation W, so that they can then mount said components on the piece.

From the foregoing description it is thus evident that the robot according to the invention is able to adapt in an extremely flexible way to different specific needs of assembly of pieces that are different from one another, given that it has the possibility of positioning the piece with any desired orientation and at the same time is able to transfer the piece rapidly and easily between the workstation W and the conveying line 2 even in the case of pieces which have shapes that are very different from one another.

At the same time, the robot according to the invention is able to operate with extreme efficiency notwithstanding the relative simplicity of its structure and above all the reduced overall dimensions.

The specific conformation described above of the first and second manipulators constituting the robot according to the invention also enables, in implementing a concrete embodiment of the invention, use for said manipulators of components already produced by the present applicant as components of robots currently manufactured by the applicant. The extreme simplicity of the structure of the manipulators according to the invention enables in fact adaptation, for the purpose, of arms and other components that have already been used for some time for the production of manipulators marketed by the present applicant.

Of course, without prejudice to the principles of the invention, the details of construction and the embodiments may vary widely with respect to what is described and illustrated herein purely by way of example, without thereby departing from the scope of the present invention being defined by the claims.

## Claims

1. A manipulator robot comprising a first manipulator (M1) and a second manipulator (M2) which have a fixed supporting structure in common and two mutually independent systems of articulated arms, said first manipulator (M1) comprising a worktable (7) **characterized in that** the first manipulator further comprises at least one oscillating arm (5) for supporting the worktable (7), articulated at one end to the common fixed structure (3) and at the other end to the worktable (7), motor means (6) for governing rotation of said oscillating arm (5), and a connection system with articulated levers set between the worktable (7) and the fixed structure (3) in order to maintain the worktable (7) with a horizontal orientation during the movement of oscillation of the aforesaid supporting arm (5); and
- **in that** said second manipulator (M2) comprises a pair of oscillating supporting arms (18) articulated to the common fixed structure (3) and supporting at their free ends a cross-member (24), which can turn about an axis thereof (23), and motor means (19, 25) for governing oscillation of said supporting arms (18) and rotation of said cross-member (24).

2. The robot according to Claim 1, **characterized in that** said rotatable cross-member (24) in turn supports in rotation about an axis (26) orthogonal to the axis (23) of the cross-member (24) a fork-like structure having two branches (27), mounted oscillating on which is a gripping member (32) for gripping a frame (P3) for attachment and support of the piece (B), said second manipulator (M2) having further motor means (28) carried by the structure of said cross-member (24) for governing rotation of said fork-like element (27).

3. The robot according to Claim 1, **characterized in that** said worktable (7) is designed to receive a pallet (P) including a horizontal table (P1) functioning also as support-magazine for a series of components (C) designed to be assembled on the piece (B).

4. The robot according to Claim 3, **characterized in that** fixed to said horizontal table (P1) is a vertical frame (P2) designed to receive slidingly a frame (P3) for attachment and support in cantilever fashion of the piece (B).

5. The robot according to Claim 4, **characterized in that** said frame (P3) for attachment has an annular conformation, with a central opening, to enable access also to the face of the piece facing said flange, when the robot orients said face upwards.

6. A cell for automated assembly of components and/or execution of operations on a piece (B) on an industrial production line, comprising a conveying line (2) for feeding pieces (B) at input to the cell (1) and for unloading pieces (B) from the cell (1) and means (R) for transferring a piece (B) from the conveying line (2) to a workstation (W) in the cell (1), or vice versa, from the workstation (W) to the conveying line (2), **characterized in that** said transfer means include a manipulator robot (R) with articulated arms according to claim 1, including a first manipulator (M1) and a second manipulator (M2) which have a fixed supporting structure in common and two mutually independent systems of articulated arms, one of which is designed to move, in a way independent of the second manipulator (M2), a worktable (7), between a position adjacent to the conveying line (2) and a position adjacent to the workstation (W) and the other of which is designed to move a piece (B), in a way altogether independent with respect to the first manipulator (M1), between a position of rest on said worktable (7) and the aforesaid workstation (W).

7. The assembly cell according to Claim 6, **characterized in that** said first manipulator (M1) comprises a worktable (7), at least one oscillating arm (5) for supporting the worktable (7), articulated at one end to the common fixed structure (3) and at the other end to the worktable (7), motor means (6) for controlling rotation of said oscillating arm (5), and a connection system with articulated levers set between the worktable (7) and the fixed structure (3) in order to maintain the worktable (7) with a horizontal orientation during the movement of oscillation of the aforesaid supporting arm (5).

8. The assembly cell according to Claim 6, **characterized in that** said second manipulator (M2) comprises a pair of oscillating supporting arms (18) articulated to the common fixed structure (3) and supporting at their free ends a cross-member (24) which can turn about an axis thereof (23), and motor means (19, 25) for governing oscillation of said supporting arms (18) and rotation of said cross-member (24).

9. The assembly cell according to Claim 8, **characterized in that** said rotatable cross-member (24) in turn supports in rotation about an axis (26) orthogonal to the axis (23) of the cross-member (24) a fork-like structure having two branches (27), mounted oscillating on which is a gripping member (32), for gripping a frame (P3) for attachment and support of the piece (B), said second manipulator (M2) having further motor means (28) carried by the structure of said cross-member (24) to set said fork-like structure in rotation.

10. The assembly cell according to any one of claims 6-9, **characterized in that** said worktable (7) is designed to receive a pallet (P) including a horizontal table (P1) functioning also as support-magazine for a series of components (C) designed to be assembled on the piece (B).

11. The cell according to Claim 10, **characterized in that** fixed to said horizontal table (P1) is a vertical frame (P2) designed to receive slidingly a frame (P3) for support in cantilever fashion of the piece (B)

## Patentansprüche

1. Manipulatorroboter, der einen ersten Manipulator (M1) sowie einen zweiten Manipulator (M2) umfasst, die eine gemeinsame, ortsfeste Tragkonstruktion und zwei voneinander unabhängige Systeme von Gelenksarmen besitzen, wobei der erste Manipulator (M1) einen Arbeitstisch (7) umfasst,
**dadurch gekennzeichnet, dass** der erste Manipulator weiters zumindest einen Schwenkarm (5), der den Arbeitstisch (7) trägt und der an einem Ende an der gemeinsamen, ortsfesten Konstruktion (3) und am anderen Ende am Arbeitstisch (7) befestigt ist, eine Motoreinrichtung (6), um die Drehung des Schwenkarms (5) zu steuern, sowie ein Verbindungssystem mit Gelenkshebeln umfasst, das zwischen dem Arbeitstisch (7) und der ortsfesten Konstruktion (3) liegt, um den Arbeitstisch (7) während der Schwenkbewegung des oben erwähnten Tragarms (5) horizontal ausgerichtet zu halten; und
dass der zweite Manipulator (M2) ein Paar von verschwenkbaren Tragarmen (18), die in der gemeinsamen, ortsfesten Konstruktion (3) gelenkig gelagert sind und an ihren freien Enden ein Querelement (24) tragen, das sich um eine Achse (23) drehen kann, sowie Motoreinrichtungen (19, 25) umfasst, um das Verschwenken der Tragarme (18) und das Drehen des Querelements (24) zu steuern.

2. Roboter gemäß Anspruch 1, **dadurch gekennzeichnet, dass** das drehbare Querelement (24) seinerseits einen gabelartigen Aufbau mit zwei Armen (27) trägt, der um eine Achse (26) senkrecht zur Achse (23) des Querelements (24) gedreht werden kann, wobei an den zwei Armen (27) ein Greifelement (32) verschwenkbar befestigt ist, um einen Rahmen (P3) für die Befestigung und Halterung des Teils (B) zu ergreifen, wobei der zweite Manipulator (M2) eine weitere Motoreinrichtung (28) besitzt, die vom Aufbau des Querelements (24) getragen wird, um die Drehung des gabelartigen Elements (27) zu steuern.

3. Roboter gemäß Anspruch 1, **dadurch gekennzeichnet, dass** der Arbeitstisch (7) so ausgebildet ist, dass er eine Palette (P) empfängt, die einen horizontalen Tisch (P1) aufweist, der auch als Magazin für eine Reihe von Bauteilen (C) dient, die dazu vorgesehen sind, um auf dem Teil (B) montiert zu werden.

4. Roboter gemäß Anspruch 3, **dadurch gekennzeichnet, dass** am horizontalen Tisch (P1) ein vertikaler Rahmen (P2) befestigt ist, der so ausgebildet ist, dass er einen Rahmen (P3) für die freitragende Befestigung und Halterung des Teils (B) verschiebbar aufnehmen kann.

5. Roboter gemäß Anspruch 4, **dadurch gekennzeichnet, dass** der Rahmen (P3) für die Befestigung ringförmig mit einer Mittelöffnung ausgebildet ist, um auch auf jene Fläche des Teils zugreifen zu können, die zum Flansch gerichtet ist, wenn der Roboter diese Fläche nach oben ausrichtet.

6. Zelle für die automatische Montage von Bauteilen und/oder das Ausführen von Vorgängen auf einem Teil (B) in einer industriellen Fertigungsstraße, die eine Bandstraße (2), um Teile (B) am Einlass der Zelle (1) zuzuführen und Teile (B) von der Zelle (1) zu entladen, sowie eine Einrichtung (R) besitzt, um einen Teil (B) von der Bandstraße (2) zu einer Arbeitsstation (W) in der Zelle (1) oder umgekehrt von der Arbeitsstation (W) zur Bandstraße (2) zu transportieren, **dadurch gekennzeichnet, dass** die Transporteinrichtung einen Manipulatorroboter (R) mit Gelenksarmen gemäß Anspruch 1 aufweist, der einen ersten Manipulator (M1) sowie einen zweiten Manipulator (M2) aufweist, die eine gemeinsame, ortsfeste Tragkonstruktion sowie zwei voneinander unabhängige Systeme von Gelenksarmen besitzen, von denen einer so ausgebildet ist, dass er unabhängig vom zweiten Manipulator (M2) einen Arbeitstisch (7) zwischen einer Stellung neben der Bandstraße (2) und einer Stellung neben der Arbeitsstation (W) bewegt, wobei der andere Arm so ausgebildet ist, dass er einen Teil (B) vollkommen unabhängig vom ersten Manipulator (M1) zwischen einer Ruhestellung auf dem Arbeitstisch (7) und der oben erwähnten Arbeitstation (W) bewegt.

7. Montagezelle gemäß Anspruch 6, **dadurch gekennzeichnet, dass** der erste Manipulator (M1) einen Arbeitstisch (7), zumindest einen Schwenkarm (5), der den Arbeitstisch (7) trägt und der an einem Ende in der gemeinsamen, ortsfesten Konstruktion (3) und am anderen Ende im Arbeitstisch (7) gelenkig gelagert ist, eine Motoreinrichtung (6), um die Drehung des Schwenkarms (5) zu steuern, sowie ein Verbindungssystem mit Gelenkshebeln umfasst, das zwischen dem Arbeitstisch (7) und der ortsfesten Konstruktion (3) liegt, um den Arbeitstisch (7) während der Schwenkbewegung des oben erwähnten Tragarms (5) horizontal ausgerichtet zu halten.

8. Montagezelle gemäß Anspruch 6, **dadurch gekennzeichnet, dass** der zweite Manipulator (M2) ein Paar von verschwenkbaren Tragarmen (18), die in der gemeinsamen, ortsfesten Konstruktion (3) gelenkig gelagert sind und an ihren freien Enden ein Querelement (24) tragen, das sich um eine Achse (23) drehen kann, sowie Motoreinrichtungen (19, 25) umfasst, um das Verschwenken der Tragarme (18) und die Drehung des Querelements (24) zu steuern.

9. Montagezelle gemäß Anspruch 8, **dadurch gekennzeichnet, dass** das drehbare Querelement (24) seinerseits einen gabelartigen Aufbau mit zwei Armen (27) trägt, das um eine Achse (26) gedreht werden kann, die senkrecht zur Achse (23) des Querelements (24) verläuft, wobei an den zwei Armen (27) ein Greifelement (32) verschwenkbar befestigt ist, um einen Rahmen (P3) für die Befestigung und Halterung des Teils (B) zu ergreifen, wobei der zweite Manipulator (M2) eine weitere Motoreinrichtung (28) besitzt, die vom Aufbau des Querelements (24) getragen wird, um das gabelartige Element (27) in Drehung zu versetzen.

10. Montagezelle gemäß irgendeinem der Ansprüche 6 bis 9, **dadurch gekennzeichnet, dass** der Arbeitstisch (7) so ausgebildet ist, dass er eine Palette (P) empfängt, die einen horizontalen Tisch (P1) aufweist, der auch als Magazin für eine Reihe von Bauteilen (C) dient, die dazu vorgesehen sind, um auf dem Teil (B) montiert zu werden.

11. Roboter gemäß Anspruch 10, **dadurch gekennzeichnet, dass** am horizontalen Tisch (P1) ein vertikaler Rahmen (P2) befestigt ist, der so ausgebildet ist, dass er einen Rahmen (P3) verschiebbar aufnehmen kann, der den Teil (B) freitragend hält.

## Revendications

1. Un robot manipulateur comprenant un premier manipulateur (M1) et un second manipulateur (M2) qui possèdent une structure-support fixe en commun et deux systèmes mutuellement indépendants de bras articulés, ledit premier manipulateur (M1) comprenant une table d'oeuvre (7),
**caractérisé en ce que** le premier manipulateur comprend en outre au moins un bras oscillant (5) pour supporter la table d'oeuvre (7), articulé à l'une de ses extrémités à la structure fixe commune (3) et à son autre extrémité à la table d'oeuvre (7), des moyens moteurs (6) pour gouverner la rotation dudit bras oscillant (5), et un système de liaison avec des leviers articulés disposés entre la table d'oeuvre (7) et la structure fixe (3) afin de maintenir la table d'oeuvre (7) avec une orientation horizontale durant le mouvement d'oscillation du bras support précité(5) ; et
**en ce que** ledit second manipulateur (M2) comprend une paire de bras supports oscillants (18) articulés à la structure fixe commune (3) et supportant à leurs extrémités libres un organe transversal (24), qui peut tourner autour d'un axe de celui-ci (23), et des moyens moteurs (19, 25) pour gouverner l'oscillation desdits bras supports (18) et la rotation dudit organe transversal (24).

2. Le robot selon la revendication 1, **caractérisé en ce que** ledit organe transversal rotatif (24) supporte quant à lui en rotation autour d'un axe (26) orthogonal à l'axe (23) de l'organe transversal (24) une structure en forme de fourche ayant deux branches (27), montée oscillante sur laquelle se trouve un organe d'agrippement (32) pour agripper un châssis (P3) pour fixation et support de la pièce (B), le second manipulateur (M2) possédant d'autres moyens moteurs (28) portés par la structure dudit organe transversal (24) pour gouverner la rotation dudit élément en forme de fourche (27).

3. Le robot selon la revendication 1, **caractérisé en ce que** ladite table d'oeuvre (7) est conçue pour recevoir une palette (P) comprenant une table horizontale (P1) fonctionnant également en tant que chargeur-support pour une série de composants (C) conçus pour être assemblés sur la pièce (B).

4. Le robot selon la revendication 3, **caractérisé en ce qu'**il est fixé sur ladite table horizontale (P1) à un châssis vertical (P2) conçu pour recevoir à coulissement un châssis (P3) pour fixation et support en porte-à-faux de la pièce (B).

5. Le robot selon la revendication 4, **caractérisé en ce que** ledit châssis (P3) pour fixation possède une conformation annulaire, avec une ouverture centrale, pour autoriser un accès également à la face de la pièce faisant face audit flasque, lorsque le robot oriente ladite face vers le haut.

6. Une cellule pour l'assemblage automatique de composants et/ou l'exécution d'opérations sur une pièce (B) sur une chaîne de production industrielle, comprenant une chaîne de transport (2) pour amener des pièces (B) en entrée de la cellule (1) et pour décharger des pièces (B) de la cellule (1) et des moyens (R) pour transférer une pièce (B) de la chaîne de transport (2) jusqu'à un poste de travail (W) dans la cellule (1), ou vice versa, depuis le poste de travail (W) vers la chaîne de transport (2),
**caractérisée en ce que** lesdits moyens de transfert comprennent un robot manipulateur (R) avec des bras articulés selon la revendication 1, comprenant un premier manipulateur (M1) et un second manipulateur (M2) qui possèdent une structure-support fixe en commun et deux systèmes mutuellement indépendants de bras articulés, l'un d'entre eux étant conçu pour déplacer, d'une manière indépendante du second manipulateur (M2), une table d'oeuvre (7), entre une position adjacente à la chaîne de transport (2) et une position adjacente au poste de travail (W) et l'autre d'entre eux étant conçu pour déplacer une pièce (B), d'une manière globalement indépendante par rapport au premier manipulateur (M1), entre une position de repos sur ladite table d'oeuvre (7) et le poste de travail précité (W).

7. La cellule d'assemblage selon la revendication 6, **caractérisée en ce que** ledit premier manipulateur (M1) comprend une table d'oeuvre (7), au moins un bras oscillant (5) pour supporter la table d'oeuvre (7), articulé à une extrémité à la structure fixe commune (3) et à l'autre extrémité à la table d'oeuvre (7), des moyens moteurs (6) pour contrôler la rotation dudit bras oscillant (5), et un système de liaison avec des leviers articulés disposés entre la table d'oeuvre (7) et la structure fixe (3) afin de maintenir la table d'oeuvre (7) avec une orientation horizontale durant le mouvement d'oscillation du bras support précité (5).

8. La cellule d'assemblage selon la revendication 6, **caractérisée en ce que** ledit second manipulateur (M2) comprend une paire de bras supports oscillants (18) articulés à la structure fixe commune (3) et supportant à leurs extrémités libres un organe transversal (24) qui peut tourner autour d'un axe de celui-ci (23), et des moyens moteurs (19, 25) pour gouverner l'oscillation desdits bras supports (18) et la rotation dudit organe transversal (24).

9. La cellule d'assemblage selon la revendication 8, **caractérisée en ce que** ledit organe transversal rotatif (24) supporte quant à lui en rotation autour d'un axe (26) orthogonal à l'axe (23) de l'organe transversal (24) une structure en forme de fourche ayant deux branches (27), montée oscillante sur laquelle se trouve un organe d'agrippement (32), pour agripper un châssis (P3) pour fixation et support de la pièce (B), ledit second manipulateur (M2) ayant d'autres moyens moteurs (28) portés par la structure dudit organe transversal (24) pour amener en rotation ladite structure en forme de fourche.

10. La cellule d'assemblage selon l'une des revendications 6 à 9, **caractérisée en ce que** ladite table d'oeuvre (7) est conçue pour recevoir une palette (P) comprenant une table horizontale (P1) fonctionnant également en tant que chargeur-support pour une série de composants (C) conçus pour être assemblés sur la pièce (B).

11. La cellule selon la revendication 10, **caractérisé en ce qu'**il est fixé à ladite table horizontale (P1) un châssis vertical (P2) conçu pour recevoir à coulissement un châssis (P3) pour supporter la pièce d'une manière en porte-à-faux.
